# EUROPEAN PATENT APPLICATION

(11) **EP 1 385 086 A1**
(43) Date of publication of application: **28.01.2004**
(21) Application number: 02425483.1
(22) Date of filing: 24.07.2002
(51) Int. Cl.: G06F 9/445

(54) **Method for executing instructions in an at least partially non compiled format**

(71) Applicant: Ottaviani, Gabriele, 47842 San Giovanni in Marignano (Rimini) (IT)
(72) Inventor: Ottaviani, Gabriele, 47842 San Giovanni in Marignano (Rimini) (IT)
(74) Representative: Tansini, Elio Fabrizio

(57) **Abstract**

A process for execution of instructions in a format at least partly uncompiled, comprising the steps of detecting an identifier code (101) and reading an uncompiled portion (102) of an instruction to be executed; the uncompiled portion (102) is associated with the identifier code (101) in a main file (100). The identifier code (102) is compared with a preset number of reference values (201); depending on the comparison, a preset compiled portion (202) is selected in an operating file (200). The uncompiled portion (102) and compiled portion (202) are associated to form and execute a complete instruction (203).

## Description

The present invention relates to a process for execution of instructions in a format at least partly uncompiled.

In is known that in order to enable an electronic computer to execute a preset number of instructions, said instructions are required to be inserted in an appropriate binary format, which is directly understandable by the machine.

However, since direct programming in such a format is very complicated, some conversion softwares have been made available, the so-called compilers.

Compilers enable the programmer to prepare and insert a set of instructions in a language which is more comprehensible to the programmer himself/herself with respect to the machine language (Pascal, C, Fortran, etc., for example) and therefore, through a predetermined series of conversion steps, to perform conversion of the inserted file into a machine language, to enable the computer to understand these instructions and execute them as required.

Therefore, compilers carry out a full conversion of the file arranged by the user, giving back a corresponding compiled file (of the ".EXE" type, for example). The compiled file is then started and executed.

A clear drawback present in this type of process resides in that, to make any variation to the program, it is substantially possible to only act on the original file (the one not yet compiled) that, before being able to be newly executed, will therefore need a new compilation.

In other words, only very skilled programmers are able to make modifications or corrections in an already compiled format, due to the fact that comprehension of such a binary format is very difficult and complicated.

This, first of all, brings about a great waste of time, when a variation whatsoever is to be made to the file to be executed. In addition, due to the above factors, the above described compilation and execution process is clearly characterized by a poor flexibility of use, exactly due to the necessary times for implementation of possible modifications, and subsequent checking on the software operation.

Accordingly, it is an object of the present invention to solve the above mentioned drawbacks.

In particular, the present invention aims at providing a process for execution of instructions in an at least partly uncompiled format enabling execution of a preset number of instructions or commands without requiring compilation of the file through which such instructions or commands are defined.

It is a further aim of the present invention to provide a process for execution of instructions enabling modifications to be carried out and consequent operation of the system to be checked without too much waste of time.

Another aim of the present invention is to provide a process for execution of instructions having a great flexibility of use.

The foregoing and further aims are substantially achieved by a process for execution of instructions in an at least partly uncompiled format as described in the appended claims.

Further features and advantages will become more apparent from the description of a preferred embodiment given by way of non-limiting example, of a process for execution of instructions in an at least partly uncompiled format diagrammatically shown in the accompanying drawings, in which:

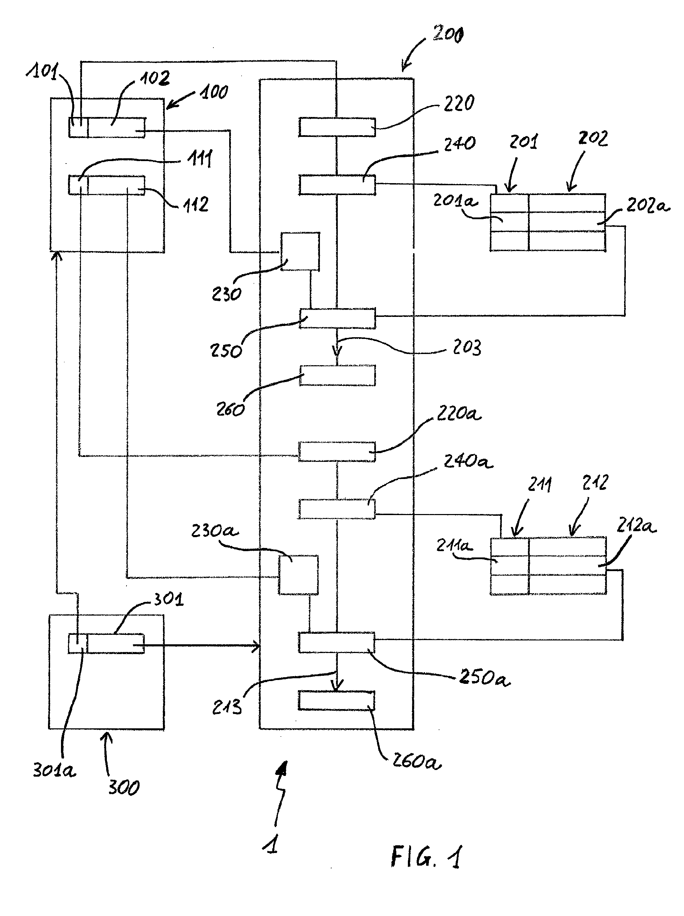

- Fig. 1 is a general block diagram of the steps performed by the process in accordance with the present invention;

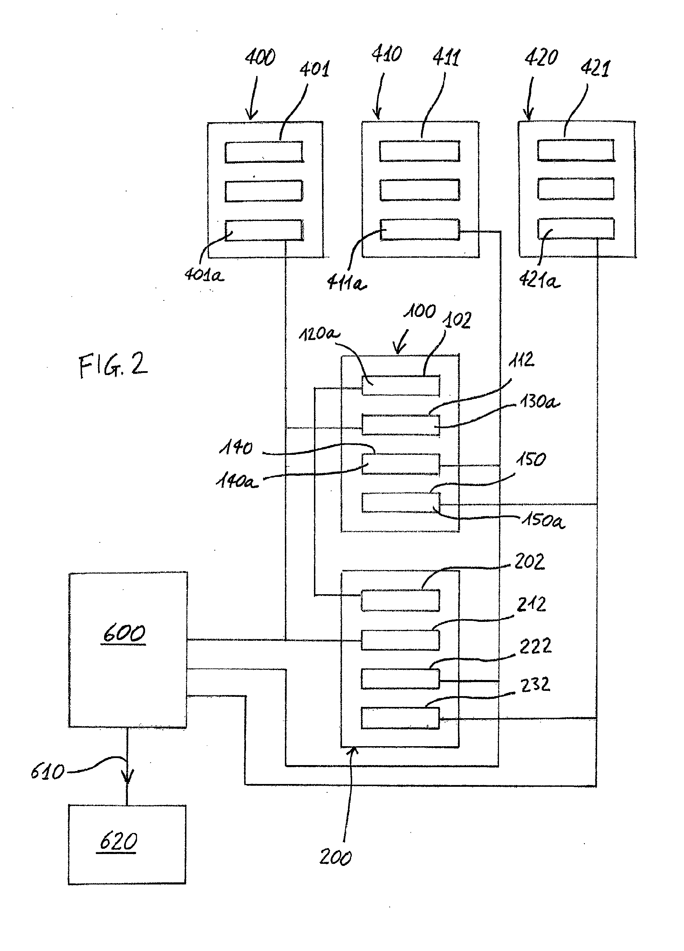

- Fig. 2 is a block diagram of a specific embodiment of the process in Fig. 1.

The process in accordance with the present invention first of all operates on a main file 100, made as a general text file, in any uncompiled format. The main file can generally be a file in ASCII format and, more particularly, a file in TXT format; the last-mentioned choice is particularly advantageous because the TXT format has minimum memory requirements and is compatible with all most widespread data processing systems and equipment.

The main file 100 incorporates at least one identifier code 101 for a predetermined instruction to be executed, and an uncompiled portion 102 of such an instruction; the identifier code 101 and uncompiled portion 102 are mutually associated in the main file 100.

Practically, the uncompiled portion 102 can be an alphanumeric value for example, that must be assigned to a preset variable, or a complete command written in any programming language.

The identifier code 101 may consist for example of either the location taken by the uncompiled portion 102 within the main file 100, or a text portion (consisting of a recognition number, the name of a variable to which a given value is to be assigned, etc.) present in the main file 100 itself; in the latter case, the identifier code 101 and uncompiled portion 102 are disposed in side by side relationship within the main file 100 text.

In this way, by the identifier code 101 it will be possible, as detailed in the following, to recognize which instruction typology is to be performed, and through the uncompiled portion 102 all necessary information for execution of same is supplied.

To read and interpret the contents of the main file 100, an operating file 200 is activated which is suitably accomplished so as to recognize the above mentioned identifier code 101 and consequently execute the predetermined instruction, following that which is specified in the uncompiled portion 102.

For performing the process in accordance with the present invention, the operating file 200 is in a compiled format.

The operating file 200 first of all comprises a detecting block 220 to detect the identifier code 101 present in the main file 100, and a reading block 230, to read the uncompiled portion 102 associated with the identifier code 101.

The reading step can be advantageously performed by copying the string of characters forming the uncompiled portion 202 in a read buffer so that an identical copy of the uncompiled portion 102 is available in the operating file 200 for subsequent processing operations.

A comparator block 240 compares the detected identifier code 101 with a preset number of reference values 201; each reference value 201 is associated, in the operating file 200, with a respective compiled portion 202 of an instruction to be executed.

On ascertaining a substantial equality between the detected identifier code 101 and a predetermined one of said reference values 201a, the preset compiled portion 202a associated with such a value 201a can be selected and in this manner the instruction typology to be executed can be identified.

Through an association block 250, should said substantial equality be ascertained, the uncompiled portion 102 is associated with the preset compiled portion 202, so as to obtain a complete instruction 203.

The complete instruction 203 is then executed by an execution block 260.

Should the identifier code 101 practically consist of a text portion disposed in side by side relationship with the uncompiled portion 102 in the main file 100, the above steps will consist in comparing code 101 itself with the reference values 201, each of which corresponds to a given typology of command to be executed, defined by the compiled portion 202 associated therewith.

When the predetermined reference value 201 is found to be substantially equal to the identifier code 101, the uncompiled portion 102 and preset compiled portion 202 are combined to form said complete instruction 203.

Should the identifier code 101 be representative of the location taken by the uncompiled portion 102 in the main file 100 text, said file is sequentially searched until the reading pointer reaches the location indicated by the predetermined reference value 201a and, therefore, the text portion is read, i.e. the uncompiled portion 102 which is in that location.

In this second case too, therefore, operation of the electronic computer at the moment that a text portion of the main file 100 identified through its location in the main file 100 itself is to be read, will refer to a detection step of such a location and to a comparison step with at least a previously stored value.

By way of example, assignment of a preset value to a preset variable is assumed.

This value is incorporated into the uncompiled portion 102 of the main file 100; the compiled portion 102, as above pointed out, is associated with an identifier code 101 which in this case may consist of the name of the variable to which the preset value is to be assigned.

When the operating file 200 during sequential reading of the main file 100 recognizes the name of this variable, it assigns it the value stated in the uncompiled portion 102.

Should the stated value be a numeric value, a conversion step of the uncompiled portion 102 into the corresponding numeric value incorporated therein is provided before assignment of such a value to the predetermined variable.

In more detail, the detecting block 220 of the operating file 200 detects the variable name defining the identifier code 101 in the main file 100; the comparator block 240 compares such a name with a series of previously stored names constituting said reference values 101.

When a substantial equality between the name present in the main file 100 and one of the previously stored names is ascertained, the reading block 230 reads the uncompiled portion 102 incorporating the value to be assigned to the stated variable.

The association block 250 receives the uncompiled portion 102 from the reading block 130 to associate it with the preset compiled portion 202a, selected through said comparing operation.

The preset compiled portion 202a, in this case, consists of an already compiled assignment instruction to associate the value shown in the uncompiled portion 102 of the main file 100 with the stated variable; thus the complete instruction 203 consisting in this case in allocating to the selected variable the stated value shown in the uncompiled portion 102, is obtained.

Another example may consist in executing a command completely written in the main file 100.

In this case, the identifier code 101 may consist of any alphanumeric character conventionally associated with commands completely written in the main file 100; the uncompiled portion 102 fully incorporates this command.

The detecting block 220 detects the identifier code 101 and, through the comparator block 240 and the above described operations, there is determined that in the uncompiled portion 102 there is a command to be executed, completely written in the main file 100.

The association block 250 associates the command incorporated in the uncompiled portion 102 with the corresponding preset compiled portion 202a, selected through the above described comparing operation.

The preset compiled portion 202a consists of an already compiled particular instruction enabling commands inserted in the form of strings of characters to be executed, through appropriate interpretation of the contents thereof; for instance, commands of this type can be DO, DO CMD, EXECUTE, etc. that, combined with the string constituting the uncompiled portion 102, define the complete instruction 203. The last-mentioned instruction is ultimately executed by the execution block 260.

It is apparent from the above description that the main file 100 is not submitted to a compiling process; in fact, the operating file 200 has the task of extracting individual portions of the main file 100, in the form of strings, and associate them with already compiled code portions, incorporated in the operating file 200 itself; practically, the instructions and/or parameters associated therewith have migrated from the main file 100 to the operating file 200 in the form of parameters so that the operating file 200 can perform several different functions and, where necessary, can refer to the main file 100 to extract parameters, values, instructions, etc. and consequently execute appropriate commands.

It is important to point out that, among the parameters migrated from the main file 100 to the operating file 200 there may be complete commands too, executed by the operating file 200 after selection and detection of same. It is apparent that the main file 100 can incorporate different uncompiled portions, each associated with a respective identifier code.

In fact, it is provided that the main file 100 may also incorporate an auxiliary uncompiled portion 112, associated with an auxiliary identifier code 111; the auxiliary uncompiled portion 112 and auxiliary identifier code 111 are processed by the operating file 200 in exactly the same manner as above described with reference to the identifier code 101 and the uncompiled portion 102. In fact, the operating code 200 is provided with an auxiliary detecting block 220a, arranged to detect the auxiliary identifier code 111 of the main file 100; an auxiliary comparator block 240 compares the auxiliary identifier code 111 with a preset number of reference parameters 211.

Depending on such a comparison, when a substantial equality between the auxiliary identifier code 111 and a predetermined one of said reference parameters 211a is ascertained, the auxiliary uncompiled portion 112 is read by an auxiliary reading block 230a and is associated with an auxiliary compiled portion 212 by an auxiliary association block 250a; the auxiliary compiled portion 212 is selected because associated with the reference parameter 211a which is substantially identical with the auxiliary identifier code 111.

Association of the auxiliary uncompiled portion 112 with the auxiliary compiled portion 212a defines the auxiliary complete instruction 213.

Finally, an auxiliary execution block 260a executes the auxiliary complete instruction 213 obtained through the association performed by the auxiliary block 250a.

Advantageously, the complete instruction 203 is performed before the auxiliary association block 250a carries out association of the auxiliary uncompiled portion 112 with the auxiliary compiled portion 212a; in more detail, execution of the complete instruction 203 by the execution block 260 is carried out before the auxiliary reading block 230a reads the auxiliary uncompiled portion 112.

It is therefore apparent that the main file 100 is not submitted to a compiling process aiming at giving back a corresponding compiled format of the entire main file 100 itself; vice versa, individual portions of the main file 100 are extracted in succession, following a preset sequence, so as to carry out a selection of, and possibly integrate, already compiled commands incorporated in the operating file 200.

In order to activate execution of the operating file 200, program 1 is provided to include an auxiliary file 300 in the compiled format too and incorporating a preset number of instructions.

In more detail, the auxiliary file 300 is provided with one or more calls 301 addressed to the operating file 200 to activate operation of same; each of said calls 301 can hold a reference code 301a to identify the main file 100.

In fact, the operating file 200 can be considered as a sort of external routine that can be recalled during operation of the auxiliary file 300 each time it is considered as necessary; practically, the operating file 200 can be a class module, that can be included in the auxiliary file 300 through said calls 301.

In addition it should be noted that the operating file 200 can be active on a plurality of uncompiled text files, provided the structure of these files is compatible with operation of the above described functional blocks of the operating file 200 and can be detected and understood by said blocks.

At all events, calls 301 incorporated in the auxiliary file 300 have the task of defining on which text file the operating file has to operate, through the reference code 301a.

In addition, the auxiliary file 300 can carry out calls to different operating files; in this instance, each call will have to identify both the operating file to be activated and the text file on which this operating file is called to operate.

A particular application of the process in accordance with the present invention can be found in the field of generating messages in an electronic format, and in particular messages of the SMS type.

In this connection, it is necessary to point out that a message of the SMS type can be implemented as a conventional text file, incorporating the number of the addressee cellular telephone, the text of the true message and a time reference relating to the time at which such a message is to be sent. In this way, the provider of the telephone service on which one depends for message transmission, has all necessary information for performing the required operation.

The process being the object of the present invention is employed for automatic generation of such text files, depending on that which is specified in the main file 100; in more detail, a selection from a plurality of previously stored data is carried out to decide which is the addressee to be designated, which is to be the message text, together with the reference time parameter for transmission.

For the purpose, a first memory register 400 is arranged which incorporates a preset number of cellular telephone numbers 401, each associated with a respective addressee.

A second memory register 410 holds a preset number of text portions for composing the message to be sent; these portions can be of different type so that, disposed in side by side relationship with each other, can form different messages depending on the user's requirements.

A third memory register 420 is arranged to hold a preset number of reference time parameters 421 that can be associated with each of the transmitted messages, in order to specify to the provider of cellular-telephone services which is the moment at which each message is to be mailed to the addressee.

The memory registers 400, 410 and 420 must be stored on a medium to which the operating file 200 can accede, to select therein the data required by the main file 100.

The main file 100 is suitably structured so as to enable the operating file 200 to compose the message to be sent and correctly associate such a message with both the addressee's number and the time reference for mailing.

Therefore, the uncompiled portion 102 incorporates a connecting string 120a to open the database in which the above mentioned information is contained; the auxiliary uncompiled portion 112, on the contrary, holds a selection string 130a, to select, within the first register 400, a preset addressee number 401a.

The preset addressee number 401a is associated with the predetermined SMS message 500 to be transmitted.

The main file 100 further incorporates a third uncompiled portion 140 containing a selection string 140a as well; the last mentioned string identifies one or more preset text portions 411a, that will compose the text of the predetermined SMS message 500.

In addition to the above, a fourth uncompiled portion 150 is also provided within the main file 100, which portion incorporates a selection string 150a; this string identifies, in the third register 420, a predetermined time parameter 421a to be associated with the predetermined SMS message 500 to define the mailing date of the latter.

The operating file 200 is structured in a corresponding manner, so that the indications supplied by the main file 100 can be suitably detected and interpreted.

In fact, the compiled portion 202 of the operating file 200 is a compiled instruction for opening one or more memory registers; through the identifier code 101 and the above described detecting and checking operations, the compiled instruction for opening is associated with the uncompiled portion 102. Thus the database is opened following the indications transmitted in the form of a string from the main file 100 to the operating file 200.

The compiled auxiliary portion 212a is a compiled portion of a selecting instruction to select a preset number of data within a database.

The auxiliary portion 212a is associated with the auxiliary uncompiled portion 102 so that the extracted data are those indicated by the selection string 130a: i.e. the addressee number 401a is selected in the first register.

It is in addition provided that the operating file 200 should have a third compiled portion 222 of a selecting instruction; this third compiled portion 222 is associated with the third uncompiled portion 140 to select what is required by the third uncompiled portion 140 itself. In particular, by virtue of the combination of these portions, in the second register 410 the preset text portions 411a are selected which will compose the text of the predetermined SMS message 500.

The operating file 200 also incorporates a fourth compiled portion 232 constituting a compiled portion of a selecting instruction; the fourth compiled portion 232 is associated with the fourth uncompiled portion 150 to select, within the third register 420, the predetermined time parameter 421a defining the sending moment for the SMS message 500.

It is important to emphasize that association between the uncompiled portions 102, 112, 140 and 150 and the corresponding compiled portions 202a, 212a, 222 and 232 in the auxiliary file 200 takes place following the modalities stated above in the general description of the process: each uncompiled portion is associated, in the main file 100, with a corresponding identifier code representative of the instruction typology to be executed; through a comparison between the identifier code and the previously-stored appropriate data, the operating file 200 carries out association between each uncompiled portion extracted from the main file 100 and a corresponding compiled portion for implementation and execution of complete instructions.

In addition, it is to be noted that, where several uncompiled portions refer to the same command typology, said portions can be associated with the same compiled portion in the operating file 100. For example, the auxiliary uncompiled portion 112, third uncompiled portion 140 and fourth uncompiled portion 150, as they all relate to selections within previously stored tables, will be able to be associated with the same compiled portion within the operating file 200; in other words, the third and fourth compiled portions 222, 232 can coincide with the auxiliary compiled portion 212a.

A further possibility provided by the process in accordance with the present invention resides in that selection of some data, within the previously stored registers, may also be performed through use of data drawn from other registers.

In other words, for selection of one datum in the second register 410, reference may be made to what stated in the column of a table of the first register 400. For example, the first register 400 may comprise a plurality of records: a first field holds a cellular telephone number, which is a possible addressee, and the second record associated with the first one holds a reference (practically a pointer) to some text portions stored in the second register 410. The third uncompiled portion 140, instead of directly addressing the second register 410 for selection of the text portions, may refer to what stated in the second record associated with the number of the message addressee.

Once all required information has been selected, an aggregation block 600 associates the preset addressee number 401a, preset portions 411a of message 500 and predetermined time parameter 421a with each other, so as to form a message file 610; this file, as above said, is preferably made as a TXT type file.

The message file 610 is ultimately transmitted, through an appropriate transmission block 620, to a remote computer, practically consisting of a server of the provider of cellular telephone services, which is entrusted with the task of mailing message 500 to the addressee number 401a, at the time stated by the predetermined time parameter 421a.

Depending on requirements, the aggregation block 600 and transmission block 620 can be incorporated both into the operating file 200 and into the auxiliary file 300.

In the light of the above, it is apparent that, by conveniently setting the auxiliary file 300 and operating file 200, accomplishment of a plurality of messages is made possible, in accordance with that which is specified in the main file 100.

A particularly advantageous choice may consist in entrusting the operating file 200 exclusively with the task of interpreting and executing what inserted through the main file 200, adding possible additional commands to the code lines of the auxiliary file 300, before of after the call 301 to the main file 100.

It is also apparent that, instead of employing the aggregation block 600 and transmission block 620, an aggregation command may be added into the main file 100 in order to associate the previously selected data with each other, as well as a sending command to transmit the complete message to the remote computer; in this way, it is the auxiliary file 200 that, by interpreting these commands transmitted as strings, will carry out execution of what requested.

The program for computer in accordance with the present invention can be loaded on a memory of a computer such as a conventional PC, or it can be loaded on a portable data storing medium, such as a floppy disk for example.

Another medium that can be employed is a memory of the ROM (Read Only Memory) type.

Finally, for transmission of software 1 from a computer to another, it is provided that the same may be incorporated into a carrier signal of the electromagnetic type (an electric or optical signal, for example).

The invention achieves important advantages.

First of all, the process in accordance with the present invention enables unskilled programmers too to make modifications and variations to a file to be executed, without directly acting on a compiled format of said file and without requiring a new compilation, in connection with the changes carried out.

In addition, the process in accordance with the present invention enables modifications to be made to a file to be executed with the possibility of immediately verifying the effects of these modifications.

Another advantage resides in the flexibility of use of the process in accordance with the present invention, since possible modifications to the file to be executed can be made very quickly.

## Claims

1. A process for executing instructions in a format at least partly uncompiled, **characterized in that** it comprises:
- arranging a main file (100) in an uncompiled format incorporating at least one identifier code (101) of a predetermined instruction to be executed, said main file (100) further incorporating an uncompiled portion (102) associated with said identifier code (101), of said instruction;
- activating an operating file (200) in a compiled format for executing at least said one predetermined instruction, said step of activating said operating file (200) comprising the following steps:
- detecting said identifier code (101);
- reading said uncompiled portion (102);
- comparing said identifier code (101) with a preset number of reference values (201), each associated with a respective compiled portion (202) incorporated in said operating file (200), of an instruction to be executed;
- ascertaining a substantial equality between said identifier code (101) and one of said reference codes (201a) associated with a preset compiled portion (202a), of one instruction;
- associating said uncompiled portion (102) with said preset compiled portion (202a), thereby obtaining a corresponding complete instruction (203);
- executing said complete instruction (203).

2. A process as claimed in claim 1, **characterized in that** it further comprises the following steps:
- arranging an auxiliary file (300) in a compiled format, incorporating a call (301) to said operating file (200), for activation of said operating file (200), said call (301) preferably incorporating a reference code (302) to identify said main file (100) for execution of said complete instruction (203);
- executing said auxiliary file (200).

3. A process as claimed in claim 1, **characterized in that** said step of activating said operating file (200) further comprises:
- detecting an auxiliary identifier code (111) of a second instruction in said main file (100);
- reading an auxiliary uncompiled portion (112) of said second instruction in said main file (100), said auxiliary portion (112) being associated with said auxiliary identifier code (111);
- comparing said auxiliary identifier code (111) with a preset number of reference parameters (211), each associated with a respective compiled portion (212) incorporated in said operating file (200), of an instruction to be executed;
- ascertaining a substantial equality between said auxiliary identifier code (111) and one of said reference parameters (211a) associated with one auxiliary compiled portion (212a), of an instruction;
- associating said auxiliary uncompiled portion (112) with said auxiliary compiled portion (212a), thereby obtaining a corresponding auxiliary complete instruction (213);
- executing said auxiliary complete instruction (213).

4. A process as claimed in claim 3, **characterized in that** said step of executing said complete instruction (203) is performed before said step of associating said auxiliary uncompiled portion (112) with said auxiliary compiled portion (212a) in order to obtain said auxiliary complete instruction (213) and, preferably, before said step of reading said auxiliary uncompiled portion (112).

5. A process as claimed in claim 1, **characterized in that** said identifier code (101) is representative of a location of said uncompiled portion (102) within said main file (100).

6. A process as claimed in claim 1, **characterized in that** said identifier code (101) comprises a text portion of said main file (100), preferably disposed in side by side relationship with said uncompiled portion (102).

7. A process as claimed in anyone of the preceding claims, **characterized in that** said steps of associating said uncompiled portion (102) with said preestablished compiled portion (202a) and executing said complete instruction (203) are performed without compiling said main file (100), said steps of associating said auxiliary uncompiled portion (112) with said auxiliary compiled portion (212a) and executing said auxiliary complete instruction (213) being preferably performed without compiling the main file (100).

8. A program for a computer **characterized in that** it comprises:
- a main file (100) in an uncompiled format incorporating at least one identifier code (101) of a predetermined instruction to be executed, said main file (100) further incorporating an uncompiled portion (102) associated with said identifier code (101), of said predetermined instruction;
- an operating file (200) in a compiled format for executing at least said predetermined instruction, said operating file (200) being provided with:
- a detecting block (220) to detect said identifier code (101);
- a reading block (230) to read said uncompiled portion (102);
- a comparator block (240) to compare said identifier code (101) with a preset number of reference values (201), each associated with a respective compiled portion (202) incorporated in said operating file (200), of an instruction to be executed, said comparator block (240) being also adapted to ascertain a substantial equality between said identifier code (101) and one of said reference codes (201a) associated with a predetermined compiled portion (202) of an instruction;
- an association block (250) to associate said uncompiled portion (102) with said predetermined compiled portion (202a), should said substantial equality be ascertained, thereby obtaining a corresponding complete instruction (203);
- an execution block (260) to execute said complete instruction (203).

9. A program as claimed in claim 8, **characterized in that** said auxiliary file (300) incorporates a preset number of calls (301) to said operating file (200), each call preferably incorporating a reference code (302) to identify said main file (100) for execution of said complete instruction (203).

10. A program as claimed in claim 8, **characterized in that** said identifier code (101) is representative of a location of said uncompiled portion (102) within said main file (100).

11. A program as claimed in claim 8, **characterized in that** said identifier code (101) comprises a text portion of said main file (100) preferably disposed in side by side relationship with said uncompiled portion (102).

12. A program as claimed in claim 8, **characterized in that** said reading block (230) is arranged to select a string incorporating said uncompiled portion (102) in said main file (100) and copy said string in a read buffer.

13. A program as claimed in claim 1, **characterized in that** said main file (100) incorporates at least one auxiliary identifier code (111) of a predetermined instruction to be executed, said main file (100) also incorporating an auxiliary uncompiled portion (112) associated with said auxiliary identifier code (111), of said instruction; said operating file (200) being also provided with:
- an auxiliary detecting block (220a) to detect said auxiliary identifier code (111);
- an auxiliary reading block (230a) to read said auxiliary uncompiled portion (112);
- an auxiliary comparator block (240a) to compare said auxiliary identifier code (111) with a preset number of reference parameters (211), each associated with a respective auxiliary compiled portion (212) incorporated in said operating file (200), of an instruction to be executed, said auxiliary comparator block (240a) being also arranged to ascertain a substantial equality between said auxiliary identifier code (111) and a preset one of said reference parameters (211a) associated with a predetermined auxiliary compiled portion (212a), of an instruction;
- an auxiliary association block (250a) to associate said auxiliary uncompiled portion (112) with said predetermined auxiliary compiled portion (212a), thereby obtaining a corresponding auxiliary complete instruction (213);
- an auxiliary execution block (260a) to execute said auxiliary complete instruction (213);
said auxiliary association block (250a) and auxiliary execution block (260a) being operatively active on said main file (100) to execute said auxiliary complete instruction (213) preferably without compiling said main file (100);
said association block (250) and execution block (260) being activated in particular before said auxiliary association block (250a) and auxiliary execution block (260a) and more specifically before said auxiliary reading block (230a).

14. A program as claimed in claim 9, **characterized in that** said association block (250) and execution block (260) are operatively active on said main file (100) without compiling said main file (100).

15. A program as claimed in anyone of the preceding claims, **characterized in that** it further comprises:
- a first memory register (400) incorporating a preset number of cellular-telephone numbers (401), each associated with a respective addressee;
- a second memory register (410) incorporating a preset number of text portions (411) of one or more SMS messages;
- a third memory register (420) incorporating one or more reference time parameters (421) each associable with a respective SMS message, so as to define a sending time for said message,
said uncompiled portion (102) incorporating a connecting string (120a) for access to said memory registers, said auxiliary uncompiled portion (112) incorporating a selection string (130a) to select at least one preset addressee number (401a) of a predetermined SMS message (500), in said first register (400)
- a third uncompiled portion (140) incorporating a selection string (140a) to select one or more predetermined text portions (411a) in said second register (410) to compose said predetermined SMS message (500);
- a fourth uncompiled portion (150) incorporating a selection string (150a) to selected at least one predetermined time parameter (421a), in said third register (420), to be associated with said predetermined SMS message (500), so as to define a sending time for said message,
said compiled portion (202) incorporating a compiled portion of an instruction for opening one or more memory registers, said compiled portion (202) being associated with said uncompiled portion (102) so as to accede to said memory registers identified by said uncompiled portion (102), said auxiliary compiled portion (212) incorporating a compiled portion of a selecting instruction to select a preset number of previously stored data, said auxiliary compiled portion (212) being associated with said auxiliary uncompiled portion (202) for selection of said preset addressee number (401a) in said first register (400); said operating file (200) being also provided with:
- a third compiled portion (222) of a selecting instruction associated with said third uncompiled portion (140) for selection of said one or more message portions (411a) in said second register (410);
- a fourth compiled portion (232) of a selecting instruction associated with said fourth uncompiled portion (150) for selection of said predetermined time parameter (421a).

16. A program as claimed in claim 17, **characterized in that** said auxiliary file (300) and/or said operating file (200) further comprise an aggregation block (600) to incorporate said preset addressee number (401a), said one or more predetermined portions (411a) of the preset message (500) and said predetermined time parameter (421a), into a message file (610) preferably of the TXT type, said operating file (200) and/or auxiliary file (300) further comprising a transmission block (620) to send said message file (610) to a remote computer, the latter being arranged to transmit the message (500) to said preset addressee number (401a) at the time defined by said predetermined time parameter (421a).

17. A program as claimed in anyone of claims 8 to 16, incorporated in a portable storage medium.

18. A program as claimed in anyone of claims 8 to 16, stored in a computer memory.

19. A program as claimed in anyone of claims 8 to 16, stored in a memory of the ROM type.

20. A program as claimed in anyone of claims 8 to 16, incorporated in an electromagnetic carrier signal.
